# EUROPEAN PATENT SPECIFICATION

(11) **EP 2 705 595 B1**
(45) Date of publication and mention of the grant of the patent: **24.04.2019**
(21) Application number: 12726927.2
(22) Date of filing: 04.05.2012
(51) Int. Cl.: H02K 41/03

(54) **LINEAR MOTOR WITH MOVING MAGNETS AND REDUCED COGGING FORCE**
LINEARMOTOR MIT PERMANENTMAGNETLÄUFER UND REDUZIERTER RASTKRAFT
MOTEUR LINEAIRE AVEC ROTOR A AIMANTS PERMANENTS ET PULSATION DE COUPLE REDUITE

(30) Priority: 06.05.2011 US 201161483179 P; 02.08.2011 US 201113196128
(43) Date of publication of application: 12.03.2014
(73) Proprietor: TA Instruments-Waters L.L.C., Milford, MA 01757 (US)
(72) Inventor: CARLMARK, Richard, Tucker, Framingham Massachusetts 01701-9168 (US); HAYNER, Mark, A., Framingham Massachusetts 01701-9168 (US); MAGUIRE, Stephen, J., Framingham Massachusetts 01701-9168 (US)
(74) Representative: Harding, Andrew Philip
(86) International application number: PCT/US2012/036450
(87) International publication number: WO 2012/154529

(56) References cited:
- WO-A1-2009/068736
- DE-A1- 19 936 064
- JP-A- S57 186 965
- US-A- 5 642 013
- US-A1- 2004 169 575

## Description

### BACKGROUND

This specification describes a magnet tile structure for an armature of a linear motor.

US 2004/0169575 A1 discloses a permanent magnet structure of a rotor of an electric machine including a carrier and plural permanent magnets positioned on at least one side of the carrier for realizing a flat arrangement of the permanent magnets on a surface.

Document DE 199 36 064 discloses an armature for a linear motor comprising a magnet structure having three pole sections adjacently arranged in a plane and in a direction parallel to the intended direction of motion, the pole sections consisting of two south pole sections (S) and a north pole section (N), the north pole section (N) between the two south pole sections (S), the pole sections consisting of magnet tiles separated by linear intra-pole gaps, extending in a direction parallel to the intended direction of motion, wherein the magnet tiles are elongated rectangles and having the same length along the direction perpendicular to the intended direction of motion within in said plane, wherein all magnet tiles of the north pole section (N) have the same length and all magnet tiles of the south pole sections (S) have the same length, wherein the north pole section (N) is formed by a triple of magnet tiles, the respective magnet tiles of the triple are arranged lengthwise and perpendicular to the intended direction of motion, wherein each south pole section is formed by magnet tiles of the south pole sections which are arranged adjacently only in a direction perpendicular to the intended direction of motion.

### SUMMARY

The present invention provides an armature as claimed in claim 1.

Other features, objects, and advantages will become apparent from the following detailed description, when read in connection with the following drawing, in which:

### BRIEF DESCRIPTION OF THE SEVERAL VIEWS OF THE DRAWING

Fig. 1 is a simplified isometric view of a moving magnet linear motor;
Fig. 2A is a simplified view of a magnet carrier;
Fig. 2B is a simplified view of a magnet carrier and magnet structure;
Fig. 3 is a diagrammatic view of a tiled magnet structure according to the prior art;
Fig. 4 is a diagrammatic view of a stator tooth and magnet tiles according to the prior art;
Fig. 5 is a plot of force vs. displacement of a linear motor; according to the prior art;
Fig. 6 is a diagrammatic view of a magnet carrier and magnet structure;
Fig. 7 is a drawing of a magnet structure according to an embodiment of the invention; and
Fig. 8 is a diagrammatic view of a stator teeth and magnet tiles not forming part of the invention.

### DETAILED DESCRIPTION

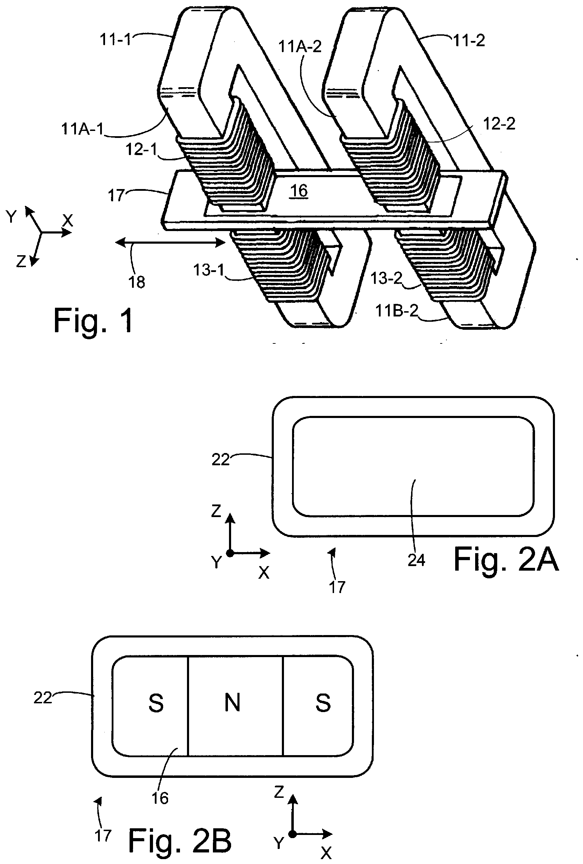

Fig. 1 shows a simplified isometric view of a moving magnet linear motor (also referred to as a linear actuator) and a coordinate system that will be used in subsequent figures. A first winding 12-1 and a second winding 13-1 are wound around legs 11A-1 and 11B-1 of a C-shaped core 11-1 of material of low magnetic reluctance, such as soft iron. A first winding 12-2 and a second winding 13-2 are wound around legs 11A-2 and 11B-2 of a second C-shaped core 11-2 of material of low magnetic reluctance, such as soft iron. Permanent magnet 16 seated in movable magnet carrier 17 is positioned in an air gap in the C-shaped cores, preferably filling a much of the air gap as possible, without contacting the C-shaped cores. Permanent magnet 16 has adjacent unlike poles (not shown in this view) between opposed surfaces of cores 11-1 and 11-2. The movable magnet carrier 17 and the permanent magnet 16 are components of the armature of the linear motor; other components of the armature are not shown in this figure. The movable magnet carrier is supported by a suspension, not shown, that permits motion in the X-direction indicated by arrow 18 while opposing lateral (that is, Y-direction according to the coordinate system of Fig. 1) "crashing" forces that urge the magnets toward the opposing faces of the C-shaped cores. In this and subsequent figures, the X-direction will be the intended direction of motion of the armature, the Y-direction will be the crashing force direction perpendicular to the plane of the armature, and the Z-direction will be in the plane of the armature, perpendicular to the intended direction of motion. In the figures, the intended direction of motion (the X-direction) is vertical.

In operation, an alternating current signal, for example a motion control signal, in the windings 12-1, 13-1, 12-2 and 13-2 interacts with the magnetic field of the permanent magnet 16, which causes motion of the armature in the direction indicated by arrow 18.

Fig. 2A shows a simplified view of the magnet carrier 17. A typical configuration for a magnet carrier is a frame 22 and window 24 configuration.

As shown in Fig. 2B, the frame 22 engages the magnet 16 on all four sides of the magnet. The magnet may be held in place mechanically by an adhesive, such as an epoxy, or by an interference fit with or without adhesive to supplement the interference fit. The magnet carrier may have structure (not shown) to couple the armature to surrounding structure so that the mechanical energy (motion and force) generated by operation of the linear motor can be usefully employed.

The magnet has one or more pole sections. In the example of Fig. 2B, the magnet has two south pole sections (designated "S") and one north pole section (designated "N"). Other implementations may have more poles.

In some implementations, the north pole sections and south poles sections may be monolithic structures. However, especially as the magnets get larger, a monolithic pole section may be undesirable. Monolithic poles structures may facilitate eddy currents which lead to undesirable heating loss in the magnet.

The undesirable heating loss in a monolithic magnet pole is proportional to the derivative with respect to time of the coil flux striking normal to the XZ plane of a monolithic magnet pole. Subdividing the monolithic magnet pole into smaller electrically isolated subsections results in less undesirable heating loss than would otherwise occur in the undivided monolithic pole.

Additionally, large monolithic pole structures may be difficult to magnetize using conventional magnetizing coils and there are practical limits to the size of a single block of magnet material that can be easily manufactured.

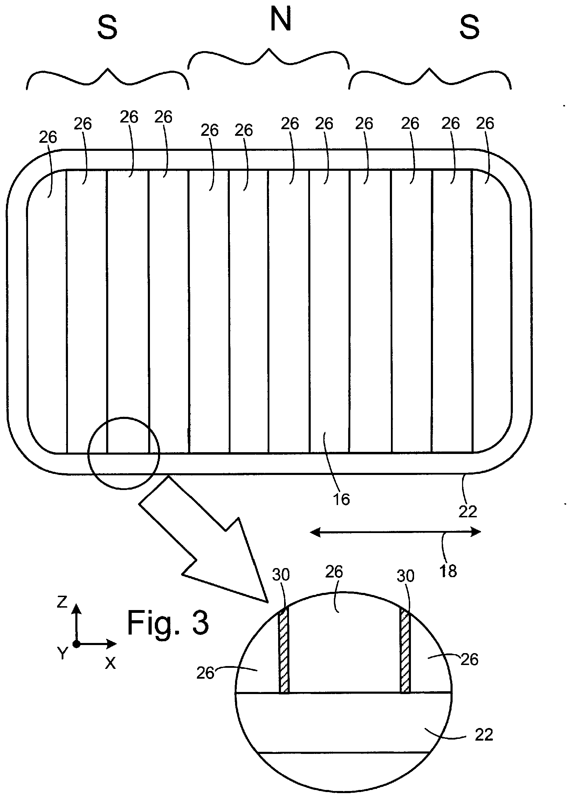

To avoid the problem of power dissipation due to eddy currents and the difficulty of manufacturing and magnetizing monolithic pole structures, the pole structures may be composed of individual "tiles" 26, as shown in Fig. 3, so that the pole structures are broken up in the plane in which the coil flux is perpendicular to the magnet, in this embodiment, the x-z plane. The magnet 16 of Fig. 3 includes two south poles structures and a north pole structure. Each of the pole structures includes four individual "tiles" 26. In an actual implementation, each tile structure may include more than four, for example nine, tiles. Each of the tiles are elongated rectangles in this view, with the direction of elongation oriented perpendicular to the direction of motion, indicated by arrow 18. Each of the tiles are engaged by the frame 22 on at least two edges. A non-conductive, non-magnetic, adhesive, for example an epoxy is placed in the gap, for example gap 30, between adjacent tiles. The structure of Fig. 3 permits the use of reasonable sizes of magnetic material and the use of conventionally sized magnetizing coils. Undesirable eddy current losses have be reduced through the use of more and smaller tiles. They therefore do not dissipate much power and do not generate as much heat as structures that are subject to eddy currents of longer path length associated with fewer, larger tiles .

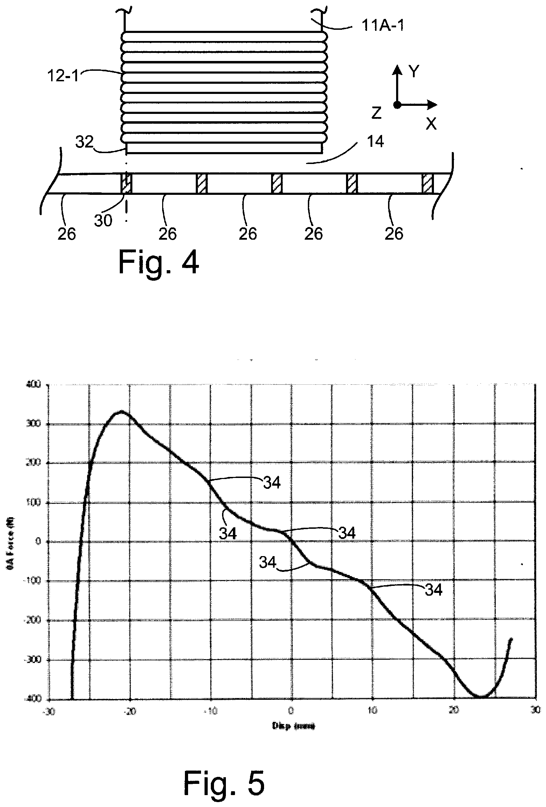

Unfortunately, as shown in Fig. 4, the structure of Fig. 3 is subject to cogging forces when the edge 32 of the core (hereinafter the "stator tooth") is aligned with a gap 30 between adjacent tiles of a pole (hereinafter intra-pole gaps). The cogging forces cause irregularities and/or nonlinearities 34 (sometimes referred to as cogging force ripple) in the force vs. displacement curve of Fig. 5. Cogging force ripple may cause difficulty in controlling the motion of the armature of the linear motor.

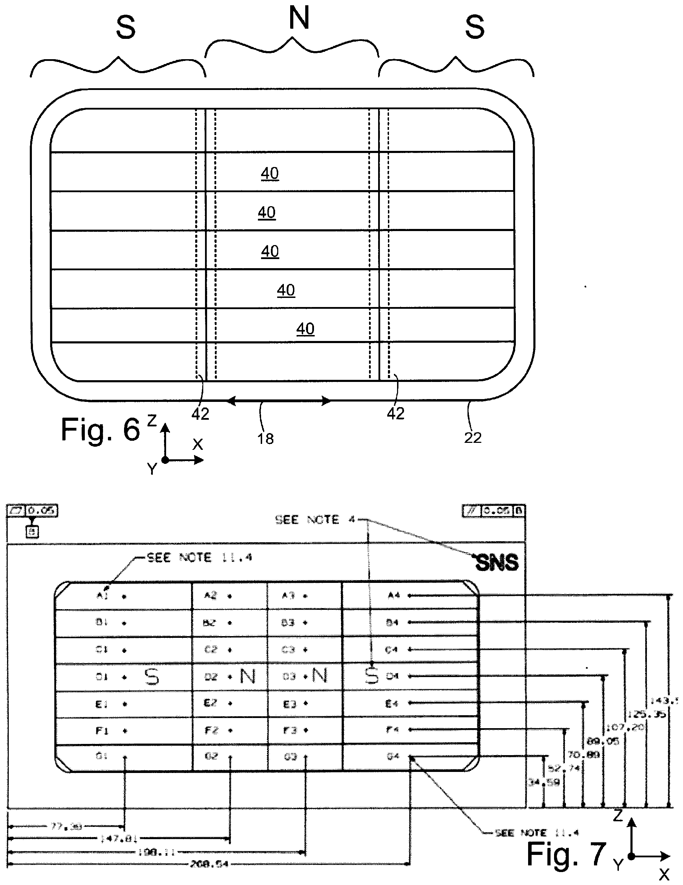

Fig. 6 shows a structure that reduces cogging force ripple. In the structure of Fig. 6, the tiles are elongated rectangles in the view of Fig. 6, with the direction of elongation oriented parallel to the direction of motion (the x-direction), indicated by arrow 18. With the structure of Fig. 6, the edges of the stator teeth do not align with any intra-pole gaps, so cogging forces resulting from alignment of stator teeth with intra-pole gaps are substantially eliminated.

Fig. 7 shows an embodiment of the invention as an actual implementation of the structure of Fig. 6, with dimensions (in mm) shown. In the embodiment of Fig. 7, the north pole section includes two tiles, for example 48 and 50, arranged lengthwise, with a resultant intra-pole gap 52. However, this intra-pole gap 52 does not need to cause cogging force ripple because the configuration, stroke, and dimensions of the components of the linear motor can be arranged so that the intra-pole gap 52 does not line up with an edge of a stator tooth during operation of the motor.

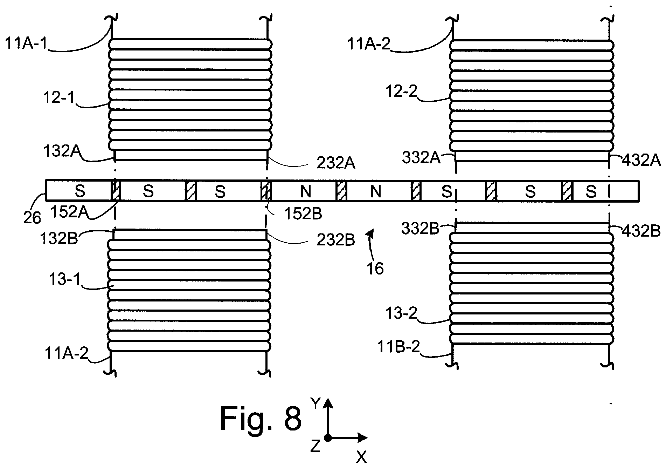

Fig. 8 illustrates another structure for reducing cogging forces. The structure does not form part of the invention. In the structure of Fig. 8, the tiles are arranged as in Fig. 3. The dimensions and placement of the stator teeth and the dimensions and configuration of the tiles 24 are arranged so that when the edge of a stator tooth such as edges 132A, 132B, 232A and 232B of are aligned with intra-pole gaps 152A and 152B, the edges of another stator tooth, such as edges 332A , 332B, 432A, and 432B are not aligned with an intra-pole gap.

## Claims

1. An armature for a linear motor, comprising: a magnet structure having three pole sections adjacently arranged in a plane and in a direction parallel to the intended direction of motion, the pole sections consisting of two south pole sections (S) and a north pole section (N), the north pole section (N) between the two south pole sections (S), the pole sections consisting of magnet tiles separated by linear first intra-pole gaps filled with non-magnetic, non-electrically-conductive material,
wherein the first intra-pole gaps extend in a direction parallel to the intended direction of motion, f wherein the magnet tiles are elongated rectangles arranged lengthwise, with the direction of elongation of the magnet tiles parallel to the intended direction of motion,
wherein all magnet tiles have the same width along the direction perpendicular to the intended direction of motion within in said plane,
wherein all magnet tiles of the north pole section (N) have the same length and all magnet tiles of the south pole sections (S) have the same length,
wherein the north pole section (N) is formed by a plurality of pairs of magnet tiles, the respective magnet tiles of each pair are arranged lengthwise in the intended direction of motion, and the pairs of magnet tiles are arranged adjacently in said direction perpendicular to the intended direction of motion,
wherein the magnet tiles of each pair are separated by second intra-pole gaps, and
wherein the second intra-pole gaps extend in a direction perpendicular to the intended direction of motion,
wherein each south pole section is formed by magnet tiles of the south pole sections which are arranged adjacently only in said direction perpendicular to the intended direction of motion.

## Patentansprüche

1. Anker für einen Linearmotor, umfassend:
eine Magnetstruktur mit drei Polabschnitten in Nebeneinanderanordnung in einer Ebene und in einer Richtung parallel zu der vorgesehenen Bewegungsrichtung, wobei die Polabschnitte aus zwei Südpolabschnitten (S) und einem Nordpolabschnitt (N), mit dem Nordpolabschnitt (N) zwischen den beiden Südpolabschnitten (S), bestehen, wobei die Polabschnitte aus Magnetfliesen bestehen, die durch lineare erste intrapolare, mit nicht magnetischem, nicht elektrisch leitfähigem Material gefüllte Spalte getrennt sind,
worin die ersten intrapolaren Spalte in einer Richtung parallel zu der vorgesehenen Bewegungsrichtung verlaufen,
worin die Magnetfliesen längliche Rechtecke sind, die in Längsrichtung angeordnet sind, wobei die Ausdehnungsrichtung der Magnetfliesen parallel zu der vorgesehenen Bewegungsrichtung ist,
worin alle Magnetfliesen die gleiche Breite entlang der Richtung senkrecht zu der vorgesehenen Bewegungsrichtung innerhalb der Ebene aufweisen,
worin alle Magnetfliesen des Nordpolabschnitts (N) die gleiche Länge aufweisen und alle Magnetfliesen der Südpolabschnitte (S) die gleiche Länge aufweisen,
worin der Nordpolabschnitt (N) durch eine Mehrzahl von Paaren von Magnetfliesen gebildet ist, die jeweiligen Magnetfliesen jedes Paares in Längsrichtung in der vorgesehenen Bewegungsrichtung angeordnet sind und die Paare von Magnetfliesen in der Richtung senkrecht zu der vorgesehenen Bewegungsrichtung nebeneinander angeordnet sind,
worin die Magnetfliesen jedes Paares durch zweite intrapolare Spalte getrennt sind, und
worin die zweiten intrapolaren Spalte in einer Richtung senkrecht zu der vorgesehenen Bewegungsrichtung verlaufen,
worin jeder Südpolabschnitt durch Magnetfliesen der Südpolabschnitte gebildet ist, die nur in der Richtung senkrecht zu der vorgesehenen Bewegungsrichtung nebeneinander angeordnet sind.

## Revendications

1. Armature pour un moteur linéaire comprenant :
une structure d'aimants ayant trois sections polaires agencées de manière adjacente dans un plan et dans une direction parallèle à la direction de déplacement voulue, les sections polaires étant constituées de deux sections polaires sud (S) et d'une section polaire nord (N), la section polaire nord (N) entre les deux sections polaires sud (S), les sections polaires étant constituées de tuiles d'aimant séparées par des premiers intervalles linéaires à l'intérieur du pôle remplis de matériau électriquement non conducteur, non magnétique,
dans laquelle les premiers intervalles à l'intérieur du pôle s'étendent dans une direction parallèle à la direction de déplacement voulue,
dans laquelle les tuiles d'aimant sont des rectangles allongés agencées dans le sens de la longueur, avec la direction d'allongement des tuiles d'aimant parallèle à la direction de déplacement voulue,
dans laquelle toutes des tuiles d'aimant ont la même largeur le long de la direction perpendiculaire à la direction de déplacement voulue dans ledit plan,
dans laquelle toutes des tuiles d'aimant de la section polaire nord (N) ont la même longueur et toutes les tuiles d'aimant des sections polaires sud (S) ont la même longueur,
dans laquelle la section polaire nord (N) est formée par une pluralité de paires de tuiles d'aimant, les tuiles d'aimant respectives de chaque paire sont agencées dans le sens de la longueur dans la direction de déplacement voulue, et les paires de tuiles d'aimant sont agencées de manière adjacente dans ladite direction perpendiculaire à la direction de déplacement voulue,
dans laquelle les tuiles d'aimant de chaque paire sont séparées par des deuxièmes intervalles à l'intérieur du pôle, et
dans laquelle les deuxièmes intervalles à l'intérieur du pôle s'étendent dans une direction perpendiculaire à la direction de déplacement voulue,
dans laquelle chaque section polaire sud est formée par des tuiles d'aimant des sections polaires sud qui sont agencées de manière adjacente uniquement dans ladite direction perpendiculaire à la direction de déplacement voulue.
